# EUROPÄISCHE PATENTANMELDUNG

(11) **EP 4 623 668 A1**
(43) Veröffentlichungstag der Anmeldung: **01.10.2025**
(21) Anmeldenummer: 25155341.8
(22) Anmeldetag: 31.01.2025
(51) Int. Cl.: A01D 75/18

(54) **FELDHÄCKSLER SOWIE VERFAHREN ZUM BETREIBEN EINES FELDHÄCKSLERS**

(30) Priorität: 27.03.2024 DE 102024108697
(71) Anmelder: CLAAS Selbstfahrende Erntemaschinen GmbH, 33428 Harsewinkel (DE)
(72) Erfinder: Miller, Samuel, 88416 Steinhausen (DE); Reinhardt, Martin, 88367 Hohentengen (DE); Fischer, Josef, 88400 Biberach (DE)
(74) Vertreter: Budach, Steffen

(57) **Zusammenfassung**

Die vorliegende Erfindung betrifft einen Feldhäcksler (1) mit einer in einem Einzuggehäuse (7) angeordneten Einzugvorrichtung (6) sowie einer dem Feldhäcksler (1) zugeordneten Fremdkörpernachweiseinrichtung, wobei im unteren Bereich des Einzuggehäuses (7) zumindest zwei Einzugwalzen (8A, 8B) angeordnet sind und im oberen Bereich des Einzuggehäuses (7) zumindest eine vordere Presswalze (9) und zumindest eine hintere Presswalze (10) höhenbeweglich an zumindest einem Lenker (17) angeordnet sind, wobei die Presswalzen (9, 10) durch mechanische und/oder hydraulische Vorspannmittel (15, 16, 20) vorgespannt sind, wobei wenigstens ein mit Druck beaufschlagter Dämpfungszylinder (18) zur Dämpfung einer Ausweichbewegung einer der Presswalzen (9, 10) mit einem Ende an dem zumindest einen Lenker (17) und mit seinem anderen Ende am Einzuggehäuse (7) angelenkt ist, wobei die Fremdkörpernachweiseinrichtung eine Regeleinrichtung (19) aufweist, die dazu ausgeführt und eingerichtet ist, durch Auswertung von Drucksignalen, die auf eine im Dämpfungszylinder (18) detektierte Druckänderung zurückgehen, auf das Vorhandensein eines Fremdkörpers (FK) zu schließen.

## Beschreibung

Die vorliegende Erfindung betrifft einen Feldhäcksler gemäß dem Oberbegriff des Anspruches 1 sowie ein Verfahren zum Betreiben eines Feldhäckslers gemäß dem Oberbegriff des nebengeordneten Anspruchs 14.

Aus der EP 2 514 299 B1 ist ein Feldhäcksler mit einer Einrichtung zum Nachweis eines in eine Einzugvorrichtung eingedrungenen Fremdkörpers bekannt, welcher einen in einer Walze angeordneten Schwingungsaufnehmer umfasst. Der Schwingungsaufnehmer ist dabei auf einer Drehachse der Walze angeordnet. Auf den die Drehachse umgebenden Walzenkörper auftreffende Fremdkörper erzeugte Schwingungen werden vom Schwingungsaufnehmer erfasst und einer Auswerteeinrichtung zugeführt, um aus den Signalen des Schwingungsaufnehmers auf das Vorhandensein eines Fremdkörpers zu schließen.

Die DE 10 2012 223 768 B4 offenbart ebenfalls einen Feldhäcksler mit einer Einrichtung zum Nachweis eines in eine Einzugvorrichtung eingedrungenen Fremdkörpers. Mittels eines Vibrationssensors sollen Schwingungen erfasst werden, die durch das Aufprallen eines Fremdkörpers auf eine Fläche in der Einzugvorrichtung erzeugt werden. Zur Reduzierung von Fehlauslösungen durch eine Auswerteeinrichtung ist zusätzlich vorgesehen, anhand einer zeitlichen Korrelation zwischen durch einen Durchsatzänderungssensor generierten Durchsatzsignalen und den Signalen des Vibrationssensors auf das Vorhandensein eines Fremdkörpers zu schließen.

Aus der EP 1 632 128 A1 ist es bekannt, die Beschleunigung einer vertikalen Auslenkbewegung einer vorderen Presswalze mittels eines dieser zugeordneten Hebels zu detektieren und das generierte Beschleunigungssignal auszuwerten, um zwischen einer durch das aufgenommene Erntegut hervorgerufenen Auslenkbewegung, die kontinuierlich verläuft, und einer durch einen Fremdkörper hervorgerufenen Auslenkbewegung, die schlagartig auftritt, unterscheiden zu können.

Allen aus dem vorstehend genannten Stand der Technik bekannten Fremdkörpernachweiseinrichtungen haftet der Nachteil an, dass sie aufgrund der indirekten Messung störanfällig sind. Mit der Störanfälligkeit und in Abhängigkeit von der eingestellten Sensivität bei der Signalauswertung geht einher, dass es entweder zu einer hohen Anzahl an Fehlauslösungen kommen kann oder wegen unzureichender Erkennungsgenauigkeit zu Beschädigungen einer der Einzugvorrichtung nachgeordnete Häckselvorrichtung. In beiden Fällen wird dadurch die Produktivität des Feldhäckslers signifikant eingeschränkt.

Ausgehend vom vorstehend genannten Stand der Technik liegt der Erfindung die Aufgabe zugrunde, einen Feldhäcksler der eingangs genannten Art weiterzubilden, welcher sich durch eine verbesserte Erkennung von Fremdkörpern auszeichnet.

Diese Aufgabe wird erfindungsgemäß durch einen Feldhäcksler mit den Merkmalen des Anspruches 1 sowie ein Verfahren zum Betreiben eines Feldhäckslers mit den Merkmalen des nebengeordneten Anspruches 14 gelöst. Vorteilhafte Weiterbildungen sind Gegenstand der abhängigen Ansprüche.

Gemäß dem Anspruch 1 wird ein Feldhäcksler mit einer in einem Einzuggehäuse angeordneten Einzugvorrichtung sowie einer dem Feldhäcksler zugeordneten Fremdkörpernachweiseinrichtung vorgeschlagen, wobei im unteren Bereich des Einzuggehäuses zumindest zwei Einzugwalzen angeordnet sind und im oberen Bereich des Einzuggehäuses zumindest eine vordere Presswalze und zumindest eine hintere Presswalze höhenbeweglich an zumindest einem Lenker angeordnet sind, wobei die Presswalzen durch mechanische und/oder hydraulische Vorspannmittel vorgespannt sind. Erfindungsgemäß ist vorgesehen, dass wenigstens ein mit Druck beaufschlagter Dämpfungszylinder zur Dämpfung einer Ausweichbewegung einer der Presswalzen mit einem Ende an dem zumindest einen Lenker und mit seinem anderen Ende am Einzuggehäuse angelenkt ist, wobei die Fremdkörpernachweiseinrichtung eine Regeleinrichtung aufweist, die dazu ausgeführt und eingerichtet ist, durch Auswertung von Drucksignalen, die auf eine im Dämpfungszylinder detektierte Druckänderung zurückgehen, auf das Vorhandensein eines Fremdkörpers zu schließen.

Wesentlich ist die Überlegung, dass das Passieren eines im Erntegutstrom enthaltenen Fremdkörpers zuerst zu einer vertikalen Auslenkung der vorderen Presswalze führt, während die hintere Presswalze in ihrer Position verbleibt. Das vertikale Auslenken der vorderen Presswalze führt zu einer Nickbewegung oder Auslenkung der vorderen Presswalze bezogen auf die Drehachse der hinteren Presswalze. Die Nickbewegung oder Auslenkung der vorderen Presswalze wird durch den wenigstens einen Dämpfungszylinder gedämpft. Die Dämpfung dieser Nickbewegung oder Auslenkung führt zu einer Druckänderung, beispielsweise zu einem signifikanten Druckanstieg, im wenigstens einen Dämpfungszylinder, was als Kriterium für das Vorhandensein eines Fremdkörpers gewertet wird. Der Druckanstieg als detektierte Druckänderung im wenigstens einen Dämpfungszylinder ist wegen der Nickbewegung aufgrund der vertikalen Auslenkung der vorderen Presswalze in Relation zu dem dadurch in den mechanischen und/oder hydraulischen Vorspannmitteln hervorgerufenen Druckanstieg größer. Der wenigstens eine Dämpfungszylinder reagiert unmittelbar mit einer Druckänderung auf das Auftreten eines Fremdkörpers zwischen der vorderen Presswalze und der gegenüberliegenden Einzugwalze, was direkt sensorisch erfasst wird. Somit können Fremdköper bei geringen Einzugsgeschwindigkeiten, geringer Größe der Fremdkörper und großen Erntegutschichthöhen in der Einzugvorrichtung zuverlässiger erkannt werden.

Hingegen tritt ein derartiger Druckanstieg als detektierte Druckänderung im wenigstens einen Dämpfungszylinder bei einer im Wesentlichen gleichmäßigen Zuführung eines fremdkörperfreien Erntegutstroms nicht auf, da die vordere Presswalze und die hintere Presswalze eine im Wesentlichen gleichmäßige Vertikalbewegung in Richtung der durch die mechanischen und/oder hydraulischen Vorspannmittel aufgebrachten Vorspannkraft ausführen, sodass die Druckänderung in dem wenigstens einen Dämpfungszylinder in Relation zum Druckanstieg in den Vorpresszylindern aufgrund der vertikalen Auslenkung der vorderen Presswalze kleiner ist. Es findet bei einer im Wesentlichen gleichmäßigen Zuführung eines fremdkörperfreien Erntegutstroms nahezu keine Nickbewegung statt, die durch den wenigstens einen Dämpfungszylinder kompensiert wird.

Bevorzugt können beidseitig der Presswalzen Dämpfungszylinder angeordnet sein.

Als mechanische und/oder hydraulische Vorspannmittel der zumindest zwei Vorpresswalzen können Vorpressfedern, insbesondere Zugfedern, und/oder Vorpresszylinder vorgesehen sein.

Der wenigstens eine Dämpfungszylinder reagiert empfindlicher auf die Auslenkung der vorderen Presswalze als die dieser zugeordneten mechanischen und/oder hydraulischen Vorspannmittel. Dadurch lässt sich gegenüber einer Überwachung einer Änderung durch die von den mechanischen und/oder hydraulischen Vorspannmitteln auf die vordere Presswalze aufgebrachte Vorspannkraft eine zuverlässigere Detektionsgenauigkeit von Fremdkörpern erreichen.

Ein weiterer Vorteil der Überwachung des Auftretens einer Druckänderung im wenigstens einen Dämpfungszylinder besteht darin, dass der Signalverlauf gleichmäßiger ist, als der Signalverlauf bei einer Bestimmung der Auslenkung der vorderen Presswalze. Der Signalverlauf bei der Bestimmung der Auslenkung der vorderen Presswalze kann in stärkerem Maß beispielsweise von der Durchsatzmenge, der Schichthöhe, der Einzugsgeschwindigkeit und/oder weiteren Umgebungs- und Einstellparametern beeinflusst sein und somit ein stärkeres Signalrauschen aufweisen, was Fehlauslösungen begünstigt.

Bevorzugt kann der zumindest eine Dämpfungszylinder mit einem mit Dämpfungsmedium befüllbar oder befüllt sein und eine zumindest bereichsweise innerhalb des Dämpfungszylinders geführte Kolbeneinrichtung aufweist, welche einen an einer Kolbenstange gehaltenen, in dem Dämpfungszylinder geführten Kolben umfasst, wobei der Dämpfungszylinder einen auf der Kolbenstangenseite angeordneten Einlass und einen auf der Kolbenseite angeordneten Auslass aufweist.

Dabei kann zumindest ein Drucksensor am Auslass und/oder am Einlass des Dämpfungszylinders angeordnet sein, welcher den Druck im wenigsten einen Dämpfungszylinder erfasst.

Weiterhin kann der Einlass durch eine Zuleitung mit einer Druckquelle verbunden sein und der Auslass durch eine Leitung mit einem Tank, wobei dem Einlass eine Einlassblende vorgeordnet und dem Auslass eine Auslassblende nachgeordnet ist. Insbesondere kann der Öffnungsquerschnitt der Einlassblende kleiner als der Öffnungsquerschnitt der Auslassblende ist. Die Einlassblende und die Auslassblende dienen der Drosselung des Dämpfungszylinders, um den Dämpfungsdruck zur Erzielung der Dämpfungswirkung einzustellen bzw. vorzugeben.

Hierbei kann der zumindest eine Drucksensor den Druck vor der Auslassblende und/oder vor der Einlassblende erfassen. Hierzu sollte der zumindest eine Drucksensor vor der Auslassblende und/oder vor der Einlassblende im Auslass und/oder Einlass angeordnet sein.

Bevorzugt kann die Regeleinrichtung dazu ausgeführt und eingerichtet sein, zur Bestimmung des Vorhandenseins des Fremdkörpers in der Einzugvorrichtung eine detektierte Druckänderung am Auslass und/oder einen detektierten Druck und/oder eine Druckdifferenz zwischen Auslass und Einlass auszuwerten.

Gemäß einer Weiterbildung kann der vorderen Presswalze ein Beschleunigungssensor zugeordnet sein, welcher zur Erfassung einer Auslenkbeschleunigung und/oder Drehbeschleunigung der vorderen Presswalze und/oder Beschleunigung der vorderen Presswalze in Richtung des Dämpfungszylinders ausgeführt ist. Auch mit dieser Weiterbildung kann die Bestimmung Auftretens eines Fremdkörpers im Erntegutstrom verbessert werden. Der Beschleunigungssensor kann alternativ oder zusätzlich zu einem dem zumindest einen Vorpresszylinder zugeordneten Drucksensor vorgesehen sein.

Gemäß einer Weiterbildung kann der vorderen Presswalze ein Winkelsensor zugeordnet sein, welcher zur Erfassung einer Nickbewegung oder Auslenkung der vorderen Presswalze ausgeführt ist. Der Winkelsensor kann alternativ oder zusätzlich zum dem zumindest einen Vorpresszylinder zugeordneten Drucksensor und/oder Beschleunigungssensor vorgesehen sein. Mittels des Winkelsensors kann die Drehbewegung bzw. Nickbewegung der vorderen Presswalze bezüglich einer Drehachse der hinteren Presswalze erfasst werden.

Insbesondere kann zur Bestimmung des Vorhandenseins des Fremdkörpers in der Einzugvorrichtung zumindest ein Schwellwert zum Vergleich mit dem Drucksignal und/oder einer Drucksignaländerung in der Regeleinrichtung hinterlegt oder hinterlegbar sein. Der Schwellwert für das Drucksignal und/oder die Drucksignaländerung kann in Abhängigkeit von einer durchschnittlichen Signalamplitude des Drucksignalverlaufes durch die Regeleinrichtung angepasst werden.

Gemäß einer Weiterbildung kann die Regeleinrichtung dazu ausgeführt und eingerichtet sein, zur Bestimmung des Vorhandenseins des Fremdkörpers in der Einzugvorrichtung eine Auswertung eines Drucksignalverlaufes durchzuführen und mit in der Regeleinrichtung hinterlegten oder hinterlegbaren Signalmusterverläufen, die für einen Fremdkörper charakteristisch sind, zu vergleichen. So können für verschiedene Arten von Fremdkörpern Signalmusterverläufe hinterlegt sein oder werden, die zur Bestimmung des Vorhandenseins des Fremdkörpers herangezogen werden.

Bevorzugt kann der zu detektierende Fremdkörper aus einem nichtmetallischen Material bestehen, insbesondere das der Fremdkörper ein Stein ist.

Insbesondere können die vordere Presswalze und die hintere Presswalze durch Vorpresszylinder als Vorspannmittel vorgespannt sein. Durch die hydraulische Vorpressung kann eine hohe Verdichtung des Erntegutes in der Einzugvorrichtung erreicht werden. Zudem ist die durch die Vorpresszylinder aufgebrachte Vorpresskraft einstellbar.

Gemäß einer Weiterbildung kann dem Vorspannmittel der vorderen Presswalze eine Sensoreinheit zugeordnet sein, welche zur Erfassung einer Änderung der von dem Vorspannmittel ausgeübten Vorspannkraft ausgeführt ist. Die zusätzliche Bestimmung der Änderung der von dem Vorspannmittel auf die vordere Presswalze ausgeübten Vorspannkraft kann zur Verbesserung der Detektionsgenauigkeit beitragen. Bevorzugt kann die Sensoreinheit als Drucksensor ausgeführt sein, welcher der vorderen Presswalze zugeordnet ist und zur Erfassung eines Druckanstiegs in dem als Vorpresszylinder ausgebildeten Vorspannmittel ausgeführt ist.

Die eingangs gestellte Aufgabe wird zudem durch ein Verfahren zum Betreiben eines Feldhäckslers mit den Merkmalen des nebengeordneten Anspruches 14 gelöst.

Gemäß dem Anspruch 14 wird ein Verfahren zum Betreiben eines Feldhäckslers mit einer in einem Einzuggehäuse angeordneten Einzugvorrichtung sowie einer dem Feldhäcksler zugeordneten Fremdkörpernachweiseinrichtung vorgeschlagen, wobei im unteren Bereich des Einzuggehäuses zumindest zwei Einzugwalzen angeordnet sind und im oberen Bereich des Einzuggehäuses zumindest eine vordere Presswalze und zumindest eine hintere Presswalze höhenbeweglich an zumindest einem Lenker angeordnet sind, wobei die Presswalzen durch mechanische und/oder hydraulische Vorspannmittel vorgespannt wird, wobei ein mit Druck beaufschlagter Dämpfungszylinder zur Dämpfung einer Ausweichbewegung einer der Presswalzen mit einem Ende an dem zumindest einen Lenker angelenkt ist und mit seinem anderen Ende am Einzuggehäuse, wobei mittels einer Regeleinrichtung der Fremdkörpernachweiseinrichtung durch Auswertung von Drucksignalen, die auf eine im Dämpfungszylinder detektierte Druckänderung zurückgehen, auf das Vorhandensein eines Fremdkörpers geschlossen wird. Auf alle Ausführungen zu der Betriebsweise des Feldhäckslers darf verwiesen werden.

Insbesondere kann durch zumindest einen am Auslass und/oder am Einlass des Dämpfungszylinders angeordneten Drucksensor ein Drucksignal und/oder ein Druckänderungssignal erfasst werden, welches mit einem Schwellwert für das Drucksignal und/oder das Druckänderungssignal verglichen wird und/oder ein Drucksignalverlauf und/oder Druckänderungssignalverlauf mit einem Signalmusterverlauf verglichen wird, der für einen Fremdkörper charakteristisch ist.

Hierdurch können Fehlauslösungen bei einer ungleichmäßigen Erntegutzuführung vermieden oder zumindest reduziert werden, da beispielsweise zwischen Auslenkungen aufgrund einer Knäuelbildung aus Halmgut und eines Steines besser differenziert werden kann.

Vorteilhaft ist, dass der Schwellwert für das Drucksignal in Abhängigkeit von einer durchschnittlichen Signalamplitude des Drucksignalverlaufes durch die Regeleinrichtung angepasst werden kann. Für verschiedene Arten von Fremdkörpern können Signalmusterverläufe in der Regeleinrichtung der Fremdkörpernachweiseinrichtung hinterlegt werden, die zur Bestimmung des Vorhandenseins des Fremdkörpers herangezogen werden.

Die vorliegende Erfindung wird nachstehend anhand eines in den Zeichnungen dargestellten Ausführungsbeispieles näher erläutert.

Es zeigen:
- Fig. 1: schematisch und exemplarisch einen vorderen Teil eines selbstfahrenden Feldhäckslers mit einem daran angeordneten Vorsatzgerät;
- Fig. 2: schematisch und exemplarisch eine Teilansicht einer Einzugvorrichtung des Feldhäckslers;
- Fig. 3: schematisch und exemplarisch eine perspektivische Teilansicht einer Einzugvorrichtung gemäß einer weiteren Ausführungsform; und
- Fig. 4: schematisch und exemplarisch eine Seitenansicht der Einzugvorrichtung gemäß Fig. 3.

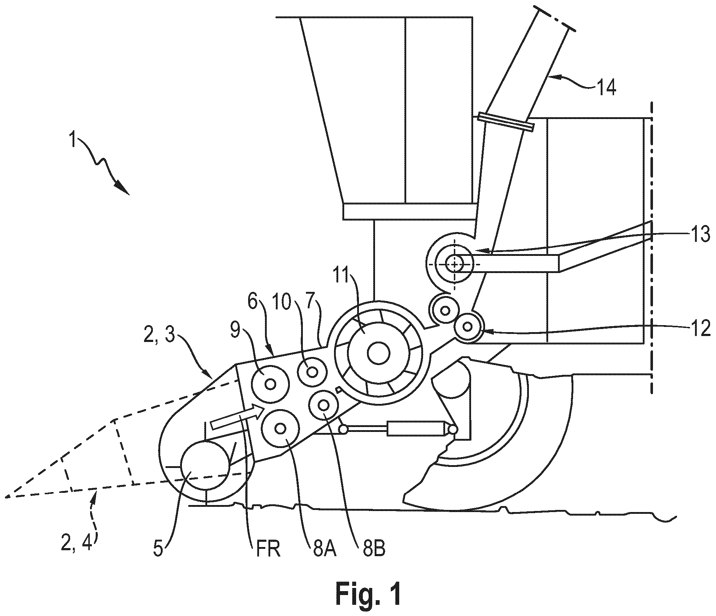

In Fig. 1 ist schematisch und exemplarisch ein vorderer Teil eines selbstfahrenden Feldhäckslers 1 mit einem daran angeordneten Vorsatzgerät 2 dargestellt. Das Vorsatzgerät 2 ist im dargestellten Ausführungsbeispiel als Pickup 3 ausgeführt. Das Vorsatzgerät 2 kann beispielsweise auch mit einem Maiserntevorsatz 4, einem sogenannten Maisgebiss, ausgestattet sein, welcher strichliniert angedeutet ist.

Die Pickup 3 umfasst eine Aufsammeltrommel 5 zum Aufsammeln von am Boden liegendem Erntegut EG, einen Erntegutkanal, der das aufgesammelte Erntegut aufnimmt, der durch einen - nicht dargestellten - Niederhalter begrenzt ist. Die Weite des Erntegutkanals ist durch Verstellen des Niederhalters veränderbar.

Das Vorsatzgerät 2 ist am Einzuggehäuse 7 einer Einzugvorrichtung 6 angeordnet. Im unteren Bereich des Einzuggehäuses 7 sind zumindest zwei Einzugwalzen 8A, 8B angeordnet. Die Einzugwalzen 8A, 8B können ortsfest oder höhenbeweglich im unteren Bereich des Einzuggehäuses 7 angeordnet sein. Im oberen Bereich des Einzuggehäuses 7 sind zumindest eine vordere Presswalze 9, auch als Vorpresswalze bezeichnet, und zumindest eine hintere Presswalze 10 angeordnet. Die vordere Presswalze 9 ist in Förderrichtung FR gesehen vor der hinteren Presswalze 10 angeordnet. Den zumindest zwei Presswalzen 9, 10 gegenüberliegend sind die zumindest zwei Einzugwalzen 8A, 8B angeordnet.

Das von dem Vorsatzgerät 2 aufgenommene Erntegut EG gelangt zur Vorverdichtung in die Einzugvorrichtung 6. Das von dem Vorsatzgerät 2 aufgenommene Erntegut wird über die Einzugwalzen 8A, 8B und die Presswalzen 9, 10 zu einer Messertrommel 11 geleitet, die das Erntegut EG in Zusammenwirken mit einer Gegenschneide zerkleinert. Das zerkleinerte Erntegut EG wird gegebenenfalls durch sogenannte Crackerwalzen einer Konditioniervorrichtung 12 weiter aufbereitet und, unterstützt durch eine Nachbeschleunigervorrichtung 13 einem Auswurfkrümmer 14 zugeführt.

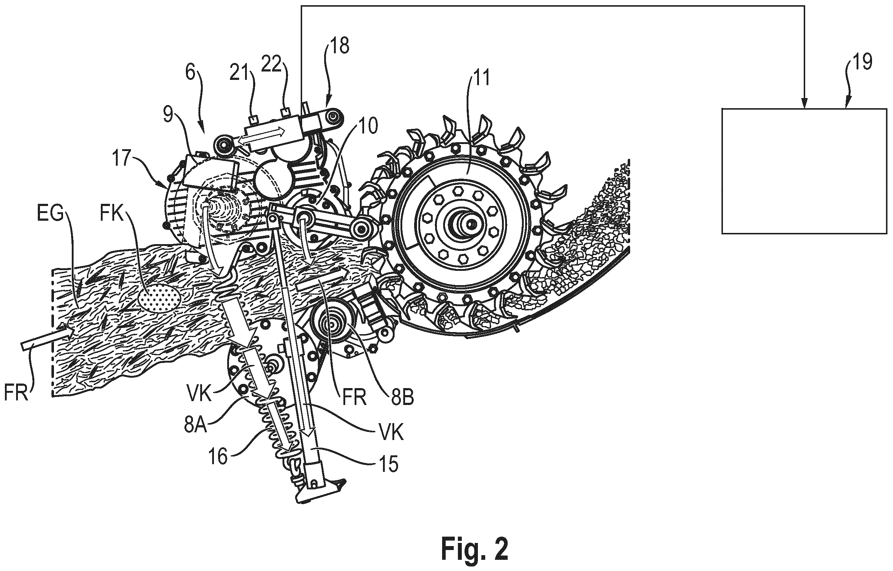

Die Darstellung in Fig. 2 zeigt schematisch und exemplarisch eine Teilansicht der Einzugvorrichtung 6 des Feldhäckslers 1. Die Presswalzen 9, 10 sind höhenbeweglich an zumindest einem Lenker 17 angeordnet. Die Presswalzen 9, 10 sind durch mechanische und/oder hydraulische Vorspannmittel vorgespannt. Im dargestellten Ausführungsbeispiel ist die vordere Presswalze 9 durch beidseitig angeordnete Zugfedern 16 als mechanische Vorspannmittel mit einer Vorspannkraft VK beaufschlagt, während die hintere Presswalze 10 durch beidseitig angeordnete Vorpresszylinder 15 als hydraulische Vorspannmittel mit einer Vorspannkraft VK beaufschlagt sind.

Für eine im Wesentlichen gleichmäßige Verteilung der Vorpresskraft VK auf beide Presswalzen 9, 10 ist wenigstens ein Dämpfungszylinder 18 vorgesehen. Bevorzugt ist beidseitig der Presswalzen 9, 10 jeweils ein Dämpfungszylinder 18 angeordnet. Der wenigstens eine Dämpfungszylinder 18 erstreckt sich im Wesentlichen parallel zur Förderrichtung FR des Erntegutes EG. Der wenigstens eine Dämpfungszylinder 18 ist mit einem Ende an dem zumindest einen Lenker 17 und mit seinem anderen Ende am Einzuggehäuse 7 angelenkt.

Der zumindest eine Dämpfungszylinder 18 ist mit einem mit Dämpfungsmedium befüllbar oder befüllt, hier und vorzugsweise Hydrauliköl. Der zumindest eine Dämpfungszylinder 18 weist eine zumindest bereichsweise innerhalb des Dämpfungszylinders 18 geführte Kolbeneinrichtung auf, welche einen an einer Kolbenstange gehaltenen, in dem Dämpfungszylinder 18 geführten Kolben umfasst. Der Dämpfungszylinder 18 weist einen auf der Kolbenstangenseite angeordneten Einlass 21 und einen auf der Kolbenseite angeordneten Auslass 22 auf.

Im Erntegut EG ist ein nichtmetallischer Fremdkörper FK enthalten, der durch eine dem Feldhäcksler 1 zugeordneten Fremdkörpernachweiseinrichtung detektiert werden soll. Die Fremdkörpernachweiseinrichtung weist eine Regeleinrichtung 19 auf.

Im Fall der Detektion eines Fremdkörpers FK im sich in der Einzugvorrichtung 6 befindlichen Erntegut EG wird eine Unterbrechung des Antriebsstranges oder der Antriebsstränge des angetriebenen Vorsatzgerätes 2, der Einzugvorrichtung 6 sowie der Messertrommel 11 bewirkt. Hierdurch soll eine Beschädigung der Messertrommel 11 sowie weiterer nachgelagerter Arbeitsaggregate des Feldhäckslers 1 vermieden werden.

Zudem kann durch die Antriebsunterbrechung des Vorsatzgerätes 2 die weitere Erntegutaufnahme verhindert werden, die zu einem Gutstau im Vorsatzgerät 2 und oder der Einzugvorrichtung 6 führen kann. Die Regeleinrichtung 19 kann dazu eingerichtet sein, die Ansteuerung zur Antriebsunterbrechung durchzuführen.

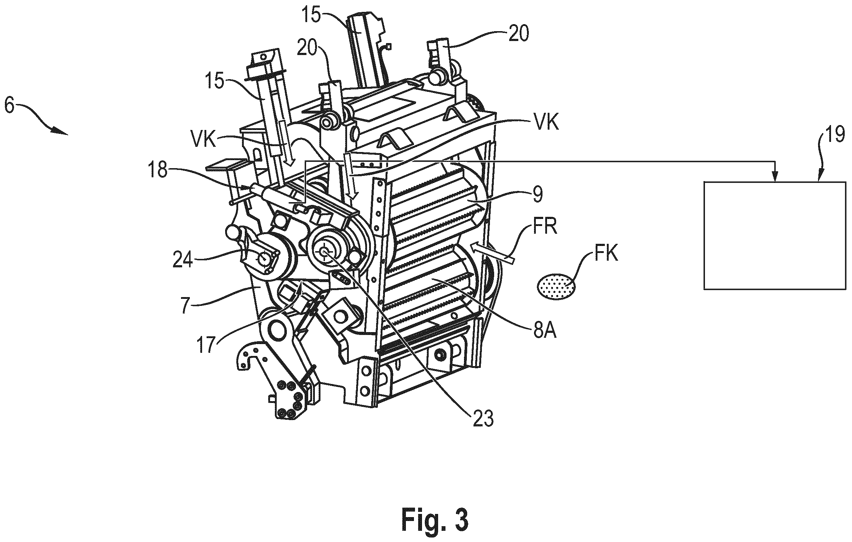

In Fig. 3 ist schematisch und exemplarisch eine perspektivische Teilansicht der Einzugvorrichtung 6 gemäß einer weiteren Ausführungsform dargestellt. Der Aufbau unterscheidet sich im Wesentlichen dadurch, dass anstelle der als Zugfedern 16 ausgeführten mechanischen Vorspannmittel beidseitig angeordnete Vorpresszylinder 20 als hydraulische Vorspannmittel vorgesehen sind, welche die vordere Presswalze 9 mit einer Vorspannkraft VK beaufschlagen. Die vordere Presswalze 9 dreht um eine Drehachse 23 und die hintere Presswalze 10 dreht um eine Drehachse 24.

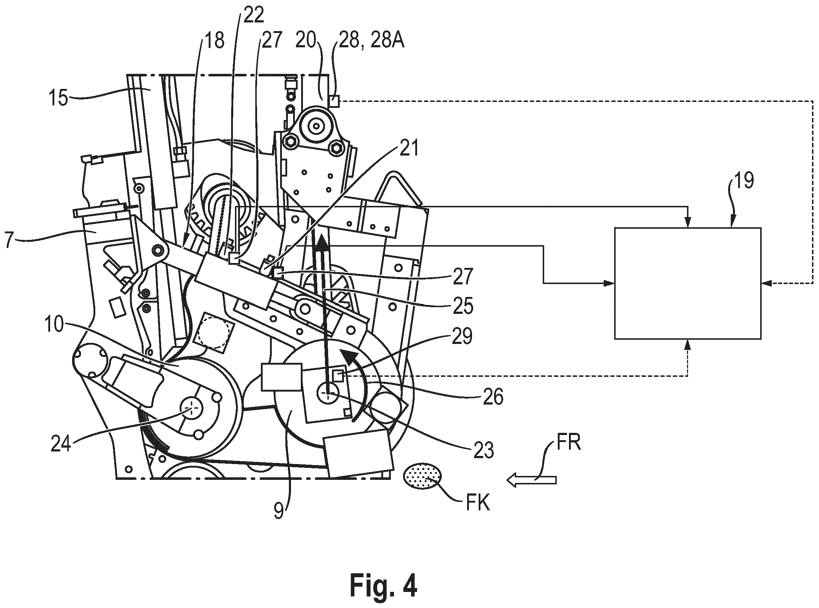

Die Darstellung in Fig. 4 zeigt schematisch und exemplarisch eine Seitenansicht der Einzugvorrichtung 6 gemäß Fig. 3. Anhand dieser Darstellung wird veranschaulicht, wie sich die Aufnahme des Fremdkörpers FK mit dem Erntegut EG auf die vordere Presswalze 9 unabhängig von der Ausgestaltung des Vorspannmittels auswirkt.

Das der Einzugvorrichtung 6 zugeführte Erntegut EG bewirkt eine im Wesentlichen gleichmäßige vertikale Auslenkung der vorderen und hinteren Presswalze 9, 10 entgegen der Vorspannkraft VK der Vorspannmittel, hier der Vorpresszylinder 15, 20. Der Dämpfungszylinder 18 reagiert auf Auf- und Abbewegungen der vorderen und hinteren Presswalze 9, 10 aufgrund von Schwankungen der zugeführten Erntegutmasse mit einer Druckänderung. Bei einer im Wesentlichen gleichmäßigen Zuführung eines fremdkörperfreien Erntegutstroms führen die vordere Presswalze 9 und die hintere Presswalze 10 eine im Wesentlichen gleichmäßige Vertikalbewegung in Richtung der durch die Vorpresszylinder 15, 20 aufgebrachten Vorspannkraft VK aus, sodass eine Druckänderung, insbesondere ein Druckanstieg, in dem wenigstens einen Dämpfungszylinder 18 in Relation zum Druckanstieg in den Vorpresszylindern 20 aufgrund der vertikalen Auslenkung der vorderen Presswalze 9 kleiner ist.

Gelangt mit dem Erntegut EG der nichtmetallische Fremdkörper FK, insbesondere ein Stein, zwischen die Einzugwalze 8A und die vordere Presswalze 9, führt dies zunächst zu einer schlagartigen Auslenkung 25 der vorderen Presswalze 9 in vertikaler Richtung entgegen der Vorspannkraft VK der Vorpresszylinder 20 als Vorspannmittel. Die gleiche Reaktion der vorderen Presswalze 9 tritt bei den als Zugfedern 16 ausgeführten mechanischen Vorspannmittel auf.

Die hintere Presswalze 10 verbleibt dabei zunächst in ihrer Position. Die schlagartige Auslenkung 25 der vorderen Presswalze 9 in im Wesentlichen vertikaler Richtung führt zu einer korrespondierenden Drehbewegung 26 der vorderen Presswalze 9 um die Drehachse 24 der hinteren Presswalze 10. Diese schlagartige Drehbewegung 26 der vorderen Presswalze 9 um die Drehachse 24, die nachfolgend auch als Nickbewegung bezeichnet wird, führt dazu, dass der Dämpfungszylinder 18 schneller zusammengedrückt wird als dies bei Schwankungen in der zugeführten Erntegutmasse der Fall ist.

Die Nickbewegung 26 wird durch den wenigstens einen Dämpfungszylinder 18 gedämpft. Die Dämpfung der von der vorderen Presswalze 9 ausgeführten Nickbewegung 26 führt zu einer Druckänderung, hier einem signifikanten Druckanstieg, in dem wenigstens einen Dämpfungszylinder 18, was als Kriterium für das Vorhandensein des nichtmetallischen Fremdkörpers FK gewertet wird. Die Druckänderung, hier der Druckanstieg, in dem wenigstens einen Dämpfungszylinder 18 ist wegen der durch die im Wesentlichen in vertikaler Richtung erfolgende Auslenkung 25 der vorderen Presswalze 9 verursachten Nickbewegung 26 in Relation zu dem dadurch in den Vorpresszylindern 20 der vorderen Presswalze 9 hervorgerufenen Druckanstieg größer. Der wenigstens eine Dämpfungszylinder 18 reagiert somit unmittelbar mit einem Druckanstieg als Druckänderung auf das Auftreten eines Fremdkörpers FK zwischen der vorderen Presswalze 9 und der gegenüberliegenden Einzugwalze 8A.

Der Einlass 21 ist durch eine Zuleitung mit einer Druckquelle verbunden, beispielsweise mit einer Hydraulikpumpe oder einem Hydrauliksystem des Feldhäckslers 1. Der Auslass 22 ist durch eine Leitung mit einem Tank verbunden. Dem Einlass 21 ist eine Einlassblende vorgeordnet. Dem Auslass 22 ist eine Auslassblende nachgeordnet. Der Öffnungsquerschnitt der Einlassblende ist kleiner als der Öffnungsquerschnitt der Auslassblende. Durch die Drosselung des Dämpfungszylinders 18 mittels der Blenden wird die Dämpfungswirkung erreicht. Tritt die Nickbewegung 26 aufgrund des zwischen der vorderen Presswalze 9 und der gegenüberliegenden Einzugwalze 8A befindlichen Fremdkörpers FK auf, führt die Drosselung zu einem signifikanten Druckanstieg im Dämpfungszylinder 18.

Um die Druckänderung zu erfassen, ist vorgesehen, dass zumindest ein Drucksensor 27 am Auslass 22 und/oder am Einlass 21 des Dämpfungszylinders 18 angeordnet ist, welcher den dort auftretenden Druck erfasst. Insbesondere erfasst der zumindest eine Drucksensor 27 den Druck vor der Auslassblende 22 und/oder der vor Einlassblende 21.

Die Drucksignale und/oder Druckänderungssignale des zumindest einen Drucksensors 27 werden der Regeleinrichtung 19 zugeführt. Die Regeleinrichtung 19 ist dazu ausgeführt und eingerichtet, zur Bestimmung des Vorhandenseins des Fremdkörpers FK in der Einzugvorrichtung 6 eine detektierte Druckänderung am Auslass 22 oder eine Druckdifferenz zwischen Auslass 22 und Einlass 21 auszuwerten. Aus der Druckänderung am Auslass 22 oder einer Änderung der Druckdifferenz zwischen Auslass 22 und Einlass 21 wird darauf geschlossen, dass die detektierte Druckänderung auf einen zwischen die untere Einzugwalze 8A und vordere Presswalze 9 gelangten Fremdkörper FK zurückgeht.

Zur Bestimmung des Vorhandenseins des Fremdkörpers FK in der Einzugvorrichtung 6 kann zumindest ein Schwellwert für das Drucksignal und/oder eine Drucksignaländerung in der Regeleinrichtung 19 hinterlegt oder hinterlegbar sein. Der zumindest eine Schwellwert kann für einen Druckwert und/oder die Drucksignaländerung und/oder eine Druckdifferenz in der Regeleinrichtung 19 hinterlegt oder hinterlegbar sein. Wird ein Überschreiten des Schwellwertes detektiert, kann die Regeleinrichtung 19 die Ansteuerung zur Antriebsunterbrechung auslösen.

Insbesondere kann die Regeleinrichtung 19 dazu ausgeführt und eingerichtet sein, zur Bestimmung des Vorhandenseins des Fremdkörpers FK in der Einzugvorrichtung 6 eine Auswertung eines Drucksignalverlaufes und/oder eines Drucksignaländerungsverlaufes durchzuführen und mit in der Regeleinrichtung 19 hinterlegten oder hinterlegbaren Signalmusterverläufen, die für einen Fremdkörper charakteristisch sind, zu vergleichen. So können in einer Speichereinheit der Regeleinrichtung 19 für verschiedene Arten von Fremdkörpern FK Signalmusterverläufe hinterlegt sein oder hinterlegt werden, die zur Bestimmung des Vorhandenseins des Fremdkörpers FK herangezogen werden.

Die Regeleinrichtung 19 ist dazu eingerichtet, das Drucksignal bzw. den Druckverlauf des zumindest einen Drucksensors 27, welcher einen Druck in dem Dämpfungszylinder 18 misst bzw. überwacht, auszuwerten, und die Ansteuerung zur Antriebsunterbrechung auf der Grundlage des Drucksignals bzw. des Druckverlaufs des zumindest einen Drucksensors 27 auszulösen.

Weiterhin kann die Regeleinrichtung 19 dazu eingerichtet sein, eine Steigung bzw. eine erste Ableitung des Drucksignals bzw. des Drucksignalverlaufs des zumindest einen Drucksensors 27 auszuwerten, und die Ansteuerung zur Antriebsunterbrechung auszulösen, wenn die Steigung bzw. erste Ableitung des Drucksignals bzw. des Drucksignalverlaufs einen vorbestimmten Schwellwert überschreitet.

Zusätzlich kann dem Vorspannmittel 16, 20 der vorderen Presswalze 9 eine Sensoreinheit 28 zugeordnet sein, welche zur Erfassung eine Änderung der von dem Vorspannmittel 16, 20 auf die vordere Presswalze 9 ausgeübten Vorspannkraft ausgeführt ist. Bevorzugt kann dem zumindest einen Vorpresszylinder 20 ein weiterer Drucksensor 28A als Sensoreinheit 28 zugeordnet sein, welcher zur Erfassung eines Druckanstiegs in dem zumindest einen Vorpresszylinder 20 ausgeführt ist. Dabei wird das Drucksignal des als Sensoreinheit 28 ausgeführten weiteren Drucksensors 28A ebenfalls der Regeleinrichtung 19 zugeführt werden, um die Genauigkeit der Erkennung des Vorhandenseins eines Fremdkörpers FK in der Einzugvorrichtung 6 zu verbessern.

Zusätzlich kann der vorderen Presswalze 9 ein Beschleunigungssensor 29 zugeordnet sein, welcher zur Erfassung einer Auslenkbeschleunigung und/oder Drehbeschleunigung der vorderen Presswalze 9 und/oder einer Beschleunigung der vorderen Presswalze 9 in Richtung des Dämpfungszylinders 18 ausgeführt ist.

Des Weiteren kann der vorderen Presswalze 9 ein Winkelsensor zugeordnet sein, welcher zur Erfassung der Nickbewegung 26 oder Auslenkung der vorderen Presswalze 9 ausgeführt ist. Mittels des Winkelsensors kann die Drehbewegung 26 bzw. Nickbewegung oder Auslenkung der vorderen Presswalze 9 bezüglich der Drehachse 24 der hinteren Presswalze 10 erfasst werden.

Die Zuordnung des Drucksensors 28A zu dem zumindest einen Vorpresszylinder 20 und/oder des Beschleunigungssensors 29 und/oder des Winkelsensors zu der vorderen Presswalze 9 erfolgt ergänzend zum zumindest einen Drucksensor 27, der dem zumindest einen Dämpfungszylinder 18 zugeordnet ist. Dabei ist eine kombinierte Verwendung von Drucksensor 28A, Beschleunigungssensor 29 und/oder Winkelsensor denkbar, um die Detektionsgenauigkeit der Fremdkörpernachweiseinrichtung zu verbessern.

### Bezugszeichenliste

| | | | |
|---|---|---|---|
| 1 | Feldhäcksler | FK | Fremdkörper |
| 2 | Vorsatzgerät | FR | Förderrichtung |
| 3 | Pickup | VK | Vorspannkraft |
| 4 | Maiserntevorsatz | | |
| 5 | Aufsammeltrommel | | |
| 6 | Einzugvorrichtung | | |
| 7 | Einzuggehäuse | | |
| 8A | Einzugwalze | | |
| 8B | Einzugwalze | | |
| 9 | Vordere Presswalze | | |
| 10 | Hintere Presswalze | | |
| 11 | Messertrommel | | |
| 12 | Konditioniervorrichtung | | |
| 13 | Nachbeschleunigervorrichtung | | |
| 14 | Auswurfkrümmer | | |
| 15 | Vorpresszylinder | | |
| 16 | Vorpressfeder | | |
| 17 | Lenker | | |
| 18 | Dämpfungszylinder | | |
| 19 | Regeleinrichtung | | |
| 20 | Vorpresszylinder | | |
| 21 | Einlass | | |
| 22 | Auslass | | |
| 23 | Drehachse | | |
| 24 | Drehachse | | |
| 25 | Auslenkung | | |
| 26 | Drehbewegung/Nickbewegung | | |
| 27 | Drucksensor | | |
| 28 | Sensoreinheit | | |
| 28A | Drucksensor | | |
| 29 | Beschleunigungssensor | | |
| EG | Erntegut | | |

## Patentansprüche

1. Feldhäcksler (1) mit einer in einem Einzuggehäuse (7) angeordneten Einzugvorrichtung (6) sowie einer dem Feldhäcksler (1) zugeordneten Fremdkörpernachweiseinrichtung, wobei im unteren Bereich des Einzuggehäuses (7) zumindest zwei Einzugwalzen (8A, 8B) angeordnet sind und im oberen Bereich des Einzuggehäuses (7) zumindest eine vordere Presswalze (9) und zumindest eine hintere Presswalze (10) höhenbeweglich an zumindest einem Lenker (17) angeordnet sind, wobei wenigstens eine der Presswalzen (9, 10) durch mechanische und/oder hydraulische Vorspannmittel (15, 16, 20) vorgespannt sind, **dadurch gekennzeichnet, dass** wenigstens ein mit Druck beaufschlagter Dämpfungszylinder (18) zur Dämpfung einer Ausweichbewegung einer der Presswalzen (9, 10) mit einem Ende an dem zumindest einen Lenker (17) und mit seinem anderen Ende am Einzuggehäuse (7) angelenkt ist, wobei die Fremdkörpernachweiseinrichtung eine Regeleinrichtung (19) aufweist, die dazu ausgeführt und eingerichtet ist, durch Auswertung von Drucksignalen, die auf eine im Dämpfungszylinder (18) detektierte Druckänderung zurückgehen, auf das Vorhandensein eines Fremdkörpers (FK) zu schließen.

2. Feldhäcksler (1) nach Anspruch 1, **dadurch gekennzeichnet, dass** der zumindest eine Dämpfungszylinder (18) mit einem mit Dämpfungsmedium befüllbar oder befüllt ist und eine zumindest bereichsweise innerhalb des Dämpfungszylinders (18) geführte Kolbeneinrichtung aufweist, welche einen an einer Kolbenstange gehaltenen, in dem Dämpfungszylinder (18) geführten Kolben umfasst, wobei der Dämpfungszylinder einen auf der Kolbenstangenseite angeordneten Einlass (21) und einen auf der Kolbenseite angeordneten Auslass (22) aufweist.

3. Feldhäcksler (1) nach Anspruch 2, **dadurch gekennzeichnet, dass** zumindest ein Drucksensor (27) am Auslass (22) und/oder am Einlass (21) des Dämpfungszylinders (18) angeordnet ist, welcher den Druck erfasst.

4. Feldhäcksler (1) nach Anspruch 2 oder 3, **dadurch gekennzeichnet, dass** der Einlass (21) durch eine Zuleitung mit einer Druckquelle verbunden ist und der Auslass (22) durch eine Leitung mit einem Tank, wobei dem Einlass (21) eine Einlassblende vorgeordnet und dem Auslass (22) eine Auslassblende nachgeordnet ist.

5. Feldhäcksler (1) nach Anspruch 4, **dadurch gekennzeichnet, dass** der zumindest eine Drucksensor (27) den Druck vor der Auslassblende und/oder vor der Einlassblende erfasst.

6. Feldhäcksler (1) nach einem der Ansprüche 3 bis 5, **dadurch gekennzeichnet, dass** die Regeleinrichtung (19) dazu ausgeführt und eingerichtet ist, zur Bestimmung des Vorhandenseins des Fremdkörpers (FK) in der Einzugvorrichtung (6) eine detektierte Druckänderung am Auslass (22) und/oder eine Druckdifferenz zwischen Auslass (22) und Einlass (21) auszuwerten.

7. Feldhäcksler (1) nach einem der vorangehenden Ansprüche, **dadurch gekennzeichnet, dass** der vorderen Presswalze (9) ein Beschleunigungssensor (29) zugeordnet ist, welcher zur Erfassung einer Auslenkbeschleunigung und/oder Drehbeschleunigung der vorderen Presswalze (9) und/oder Beschleunigung der vorderen Presswalze (9) in Richtung des Dämpfungszylinders (18) ausgeführt ist.

8. Feldhäcksler (1) nach einem der vorangehenden Ansprüche, **dadurch gekennzeichnet, dass** der vorderen Presswalze (9) ein Winkelsensor zugeordnet ist, welcher zur Erfassung einer Nickbewegung (26) der vorderen Presswalze (9) ausgeführt ist.

9. Feldhäcksler (1) nach einem der vorangehenden Ansprüche, **dadurch gekennzeichnet, dass** zur Bestimmung des Vorhandenseins des Fremdkörpers (FK) in der Einzugvorrichtung (6) zumindest ein Schwellwert zum Vergleich mit dem Drucksignal und/oder einer Drucksignaländerung in der Regeleinrichtung (19) hinterlegt oder hinterlegbar ist.

10. Feldhäcksler (1) nach einem der vorangehenden Ansprüche, **dadurch gekennzeichnet, dass** die Regeleinrichtung (19) dazu ausgeführt und eingerichtet ist, zur Bestimmung des Vorhandenseins des Fremdkörpers (FK) in der Einzugvorrichtung (6) eine Auswertung eines Drucksignalverlaufes durchzuführen und mit in der Regeleinrichtung (19) hinterlegten oder hinterlegbaren Signalmusterverläufen, die für einen Fremdkörper (FK) charakteristisch sind, zu vergleichen.

11. Feldhäcksler (1) nach einem der vorangehenden Ansprüche, **dadurch gekennzeichnet, dass** der zu detektierende Fremdkörper (FK) aus einem nichtmetallischen Material besteht, insbesondere das der Fremdkörper (FK) ein Stein ist.

12. Feldhäcksler (1) nach einem der vorangehenden Ansprüche, **dadurch gekennzeichnet, dass** die vordere Presswalze (9) und die hintere Presswalze (10) durch Vorpresszylinder (15, 20) als Vorspannmittel vorgespannt sind.

13. Feldhäcksler (1) nach Anspruch 12, **dadurch gekennzeichnet, dass** dem Vorspannmittel (15, 16, 20) der vorderen Presswalze (9) eine Sensoreinheit (28) zugeordnet ist, welche zur Erfassung eine Änderung der von dem Vorspannmittel (15 16, 20) auf die vordere Presswalze (9) ausgeübten Vorspannkraft ausgeführt ist.

14. Verfahren zum Betreiben eines Feldhäckslers (1) mit einer in einem Einzuggehäuse (7) angeordneten Einzugvorrichtung (6) sowie einer dem Feldhäcksler (1) zugeordneten Fremdkörpernachweiseinrichtung, wobei im unteren Bereich des Einzuggehäuses (7) zumindest zwei Einzugwalzen (8A, 8B) angeordnet sind und im oberen Bereich des Einzuggehäuses (7) zumindest eine vordere Presswalze (9) und zumindest eine hintere Presswalze (10) höhenbeweglich an zumindest einem Lenker (17) angeordnet sind, wobei die Presswalzen (9, 10) durch mechanische und/oder hydraulische Vorspannmittel (15, 16, 20) vorgespannt werden, **dadurch gekennzeichnet, dass** ein mit Druck beaufschlagter Dämpfungszylinder (18) zur Dämpfung einer Ausweichbewegung einer der Presswalzen (9, 10) mit einem Ende an dem zumindest einen Lenker (17) angelenkt ist und mit seinem anderen Ende am Einzuggehäuse (7), wobei mittels einer Regeleinrichtung (19) der Fremdkörpernachweiseinrichtung durch Auswertung von Drucksignalen, die auf eine im Dämpfungszylinder (18) detektierte Druckänderung zurückgehen, auf das Vorhandensein eines Fremdkörpers (FK) geschlossen wird.

15. Verfahren nach Anspruch 14, **dadurch gekennzeichnet, dass** durch zumindest einen am Auslass (22) und/oder am Einlass (21) des Dämpfungszylinders (18) angeordneten Drucksensor (27) ein Drucksignal und/oder ein Druckänderungssignal erfasst wird, welches mit einem Schwellwert für das Drucksignal und/oder das Druckänderungssignal verglichen wird und/oder ein Drucksignalverlauf und/oder ein Druckänderungssignalverlauf mit einem Signalmusterverlauf verglichen wird, der für einen Fremdkörper (FK) charakteristisch ist.
